# EUROPÄISCHE PATENTSCHRIFT

(11) **EP 3 403 319 B1**
(45) Veröffentlichungstag und Bekanntmachung des Hinweises auf die Patenterteilung: **08.01.2020**
(21) Anmeldenummer: 16798798.1
(22) Anmeldetag: 23.11.2016
(51) Int. Cl.: H02K 7/116, H02K 9/19, H02K 1/32, H02K 9/193, H02K 17/16

(54) **ELEKTRISCHE MASCHINE**
ELECTRIC MACHINE
MACHINE ÉLECTRIQUE

(30) Priorität: 15.01.2016 DE 102016200423
(43) Veröffentlichungstag der Anmeldung: 21.11.2018
(73) Patentinhaber: Continental Automotive GmbH, 30165 Hannover (DE)
(72) Erfinder: FRÖHLICH, Holger, 13127 Berlin (DE); CHARLES, David, 10553 Berlin (DE); GÜRTLER, Sönke, 14169 Berlin (DE)
(86) Internationale Anmeldenummer: PCT/EP2016/078585
(87) Internationale Veröffentlichungsnummer: WO 2017/121526

(56) Entgegenhaltungen:
- WO-A1-2007/107132
- DE-A1- 4 414 219
- US-A1- 2015 171 707

## Beschreibung

Die Erfindung betrifft eine elektrische Maschine, insbesondere für einen Antriebsstrang eines Kraftfahrzeugs.

Bei dem Betrieb elektrischer Maschinen fällt aufgrund der vorhandenen Verlustleistung Wärmeenergie an. Um diese abführen zu können, müssen elektrische Maschinen gekühlt werden. Aus dem Stand der Technik sind elektrische Maschinen für einen Kraftfahrzeugantriebsstrang, insbesondere für einen Hybridantrieb, bekannt. Um die elektrischen Maschinen zu kühlen, ist es dabei üblich, Luft oder gegebenenfalls auch Wasser zur Kühlung der elektrischen Maschine einzusetzen und dieses Kühlmedium durch zumindest einen Bereich der Maschine zu leiten. Die Kühlung der elektrischen Maschine kann dabei eingeschränkt sein, da beispielsweise über einen von Kühlwasser durchströmten Kühlwärmetauscher lediglich bestimmte Bereiche, wie das Statorblechpaket der Maschine, gekühlt werden können, und in anderen Bereichen der Maschine eine derartige Kühlung nicht möglich ist.

Vor diesem Hintergrund haben sich für den genannten Einsatzzweck elektrische Maschinen etabliert, welche über eine elektrisch isolierende Kühlflüssigkeit, beispielsweise ein Öl, gekühlt sind. Solche ölgekühlten elektrischen Maschinen weisen neben einem von Öl durchströmten Wärmetauscher eine direkte Kühlung insbesondere der Wickelköpfe bzw. in Einschränkung des Rotors der elektrischen Maschine auf. Die elektrisch isolierende Kühlflüssigkeit wird demnach innerhalb eines Gehäuses der elektrischen Maschine offen über die Wickelköpfe geleitet, sodass eine großflächige Wärmeabfuhr innerhalb der elektrischen Maschine möglich wird.

Weiterhin ist es bekannt, elektrische Maschinen vorwiegend mit Kühlluft (Durchzugsbelüftung) oder Kühlflüssigkeit (Kühlmantel) zu kühlen. Bei Generatoren wird auch eine Kühlung mit Wasserstoff eingesetzt. In der DE 196 50 572 A1 wird zudem eine Kühlung elektrischer Maschinen mittels eines Ölsumpfs beschrieben, der durch die Rotation des Rotors zerstäubt wird. Dies bringt jedoch Planschverluste mit sich, so dass der Wirkungsgrad einer solchen elektrischen Maschine nicht optimal ist. Da bei elektrischen Maschinen, insbesondere bei Asynchronmaschinen, ein Großteil der Wärme im Rotor, insbesondere in den Kurzschlussringen, entsteht, besteht ein Bedürfnis, diese intensiv zu kühlen, um nicht zuletzt auch den Wirkungsgrad der elektrischen Maschine zu steigern. Zudem ist bei vielen Anwendungen elektrischer Maschinen der zur Verfügung stehende Bauraum begrenzt. Ein zu integrierender Wassermantel oder Lüfter geht hierbei zu Lasten des eigentlichen Bauraums für die elektrische Maschine.

Aus der DE 44 14 219 A1 ist ein Rotor für eine elektrische Maschine bekannt, welcher wenigstens bereichsweise durch ein Paket von in Richtung der Drehachse des Rotors hintereinander angeordneten Lamellen gebildet ist und welcher wenigstens einen sich im Wesentlichen in Axialrichtung erstreckenden Kanal zur Förderung eines Luftstromes durch den Rotor hindurch aufweist.

Der vorliegenden Erfindung liegt daher die Aufgabe zugrunde, eine besonders kompakte elektrische Maschine mit hohem Wirkungsgrad bereitzustellen, welche eine bessere Kühlung von thermisch belasteten Bauteilen der elektrischen Maschine ermöglicht.

Die Aufgabe wird gelöst durch den Gegenstand des unabhängigen Patentanspruchs 1. Vorteilhafte Ausführungsformen sind Gegenstand der Unteransprüche, der folgenden Beschreibung sowie der Figuren.

Die erfindungsgemäße elektrische Maschine umfasst einen auf einer Rotorwelle gelagerten Rotor mit einem Rotorblechpaket, einen Stator mit Stator-Wickelköpfen, welche an gegenüberliegenden Stirnseiten des Stators angeordnet sind, und ein Gehäuse mit einem Reservoir für eine Kühlflüssigkeit.

Das Rotorblechpaket umfasst mehrere in einer Stapelrichtung gestapelte Bleche, wobei die Bleche jeweils wenigstens einen Durchbruch aufweisen, welcher die Stirnseiten des jeweiligen Blechs miteinander verbindet. Die Durchbrüche von in der Stapelrichtung versetzten Blechen sind in einer Umfangsrichtung der Bleche derart versetzt zueinander angeordnet, dass wenigstens ein durch das Rotorblechpaket verlaufender, schraubenspindelförmiger erster Kühlkanal gebildet wird, welcher einen inneren Bereich des Rotorblechpakets mit einer ersten Stirnseite des Rotorblechpakets verbindet, und wenigstens ein durch das Rotorblechpaket verlaufender, schraubenspindelförmiger zweiter Kühlkanal gebildet wird, welcher den inneren Bereich des Rotorblechpakets mit einer der ersten Stirnseite gegenüberliegenden zweiten Stirnseite des Rotorblechpakets verbindet.

Der erste Kühlkanal und der zweite Kühlkanal sind dabei gegenläufig zueinander orientiert und über wenigstens einen Durchgang innerhalb des Rotorblechpakets mit einer die Kühlflüssigkeit führenden Zuführleitung innerhalb der Rotorwelle verbunden.

Die Stapelrichtung der Bleche des Rotorblechpakets verläuft insbesondere in einer Längsrichtung des Rotors. Bei den Blechen handelt es sich jeweils um einzelne Bleche, insbesondere um kongruente Bleche, welche identische Oberflächen aufweisen. Besonders bevorzugt sind alle Bleche des Rotorblechpakets - mit Ausnahme derjenigen Bleche des Rotorblechpakets, welche den wenigstens einen Durchgang ausbilden - baugleich, das heißt es handelt sich um identische Bauteile. Die Bleche sind weiterhin bevorzugt im Wesentlichen ringförmig, so dass das Rotorblechpaket insbesondere von einer im Wesentlichen hohlzylinderförmigen Gestalt ist.

Die Bleche umfassen bevorzugt jeweils mehrere kreisringförmig angeordnete Aussparungen zur Ausbildung von Wicklungsnuten des Blechpakets. Bevorzugt sind die Wicklungsnuten äquidistant zueinander und entlang eines äußeren Umfangs der Bleche angeordnet. Jedes Blech des Rotorblechpakets umfasst wenigstens einen Durchbruch, welcher zwischen dem äußeren Umfang des Blechs, insbesondere zwischen den dort angeordneten Wicklungsnuten, und einer zentralen Bohrung des Blechs zur Lagerung des Blechs auf einer Rotorwelle angeordnet sein kann.

Weiterhin sind die Durchbrüche von in der Stapelrichtung versetzten Blechen bei deckungsgleichen Wicklungsnuten in einer Umfangsrichtung der Bleche versetzt zueinander angeordnet. Dies führt in dem zusammengesetzten Blechpaket zu einer Schränkung der Durchbrüche, wodurch die in Stapelrichtung versetzten Bleche spiralförmig zueinander angeordnet sind. Mit anderen Worten sind die Durchbrüche von in der Stapelrichtung versetzten Blechen derart verdreht bzw. tordiert zueinander angeordnet, dass in der Gesamtheit der wenigstens eine erste und der wenigstens eine zweite schraubenspindelförmige Kühlkanal ausgebildet werden. Das Design der Kühlkanäle beruht auf dem Prinzip der archimedischen Schraube, das heißt die Kühlkanäle bilden eine Förderspirale im Sinne einer Schneckenpumpe aus. Bei einer Rotation des Rotorblechpakets drehen sich auch die schraubenspindelförmigen Kühlkanäle und können somit Kühlflüssigkeit durch das Rotorblechpaket fördern.

Der erste und der zweite Kühlkanal verbinden den inneren Bereich des Rotorblechpakets mit jeweils einer Stirnseite des Rotorblechpakets. Bei dem inneren Bereich kann es sich insbesondere um einen in Längsrichtung des Rotorblechpakets zentralen inneren Hohlraum handeln, welcher von beiden Stirnseiten des Rotorblechpakets den gleichen Abstand aufweist. Der innere Bereich kann auch ein Bestandteil des wenigstens einen Durchgangs sein, welcher den ersten und den zweiten Kühlkanal mit der die Kühlflüssigkeit führenden Zuführleitung innerhalb der Rotorwelle verbindet und beispielsweise in radialer Richtung innerhalb des Rotorblechpakets verläuft. Der wenigstens eine Durchgang kann ferner insbesondere einen Schlitz, eine Nut und/oder eine Bohrung aufweisen. Bevorzugt sind mehrere solcher Durchgänge des Rotorblechpakets vorgesehen, welche entlang des Umfangs gleichverteilt angeordnet sind, wodurch eine gleichmäßige Kühlwirkung erzielt werden kann.

Die Kühlflüssigkeit wird dem inneren Bereich des Rotorblechpakets über die Zuführleitung der Rotorwelle und über den Durchgang zugeführt, wobei es sich bevorzugt um rückgekühlte Kühlflüssigkeit handelt. Mit anderen Worten bilden die Rotorwelle und das Rotorblechpaket gemeinsam eine Zuführeinrichtung von Kühlflüssigkeit aus, wobei die schraubenspindelförmigen Kühlkanäle bei Rotation des Rotorblechpakets Kühlmittel über die Zuführleitung der Rotorwelle und den wenigstens einen Durchgang des Rotorblechpakets ansaugen, durch die Kühlkanäle fördern und auf die Stator-Wickelköpfe schleudern können.

Der erste und der zweite Kühlkanal sind dabei gegenläufig zueinander orientiert, das heißt die Förderrichtungen der durch die Kühlkanäle ausgebildeten Förderspiralen zeigen in einander entgegengesetzte Richtungen. Man könnte somit von wenigstens einer rechtsgängigen/linksgängigen Förderspirale sprechen, welche durch den wenigstens einen ersten/zweiten Kühlkanal gebildet wird. Auf der ersten/zweiten Stirnseite läuft der wenigstens eine erste/zweite Kühlkanal ferner bevorzugt derart aus, dass seine gedachte Verlängerung - zumindest grob - in Richtung des jeweiligen Stator-Wickelkopfes zeigt. So kann der erste/zweite Kühlkanal insbesondere derart auslaufen, dass die Kühlflüssigkeit in einem vorgebbaren Winkel zu einer Tangente des Rotors zu dem Stator geschleudert werden kann.

Mit anderen Worten ist die Geometrie des ersten und des zweiten Kühlkanals derart ausgestaltet, dass der erste/zweite Kühlkanal, welcher den inneren Bereich mit der ersten/zweiten Stirnseite verbindet, bei einer ausreichend hohen Drehzahl des Rotorblechpakets Kühlflüssigkeit aus dem inneren Bereich ansaugen, durch den ersten/zweiten Kühlkanal fördern, auf der ersten/zweiten Stirnseite aus dem ersten Kühlkanal ausstoßen und unter Ausnutzung von auf die Kühlflüssigkeit wirkenden Fliehkräften auf den Stator-Wickelkopf im Bereich der ersten/zweiten Stirnseite schleudern kann. Auf diese Weise wird eine definierte Verteilung der Kühlflüssigkeit innerhalb der elektrischen Maschine ermöglicht. Nachdem die Kühlflüssigkeit auf die Stator-Wickelköpfe geschleudert worden ist, kann sie von diesen Abtropfen, dem Reservoir für Kühlflüssigkeit zugeführt werden und rückgekühlt werden, insbesondere in einem Wärmetauscher.

Sofern der innere Bereich mit gleichem Abstand zu beiden Stirnseiten des Rotorblechpakets angeordnet ist, wird eine besonders gleichmäßige Kühlung der Stator-Wickelköpfe ermöglicht, da auf beide Stator-Wickelköpfe in etwa die gleiche Menge an Kühlflüssigkeit geschleudert werden kann. Die Kühlkanäle eigenen sich insbesondere zur Förderung von Öl, z.B. Getriebeöl oder hochviskose Öle, Luft, einem Aerosol oder einem Flüssigkeits-Luft-Gemisch, z.B. einem Ölschaum.

Das Rotorblechpaket kann insbesondere auf die folgende Weise hergestellt werden: Die Bleche werden derart in der Stapelrichtung gestapelt, dass die Durchbrüche von in der Stapelrichtung versetzten Blechen in der Umfangsrichtung der Bleche derart versetzt zueinander angeordnet sind, dass wenigstens ein durch das Rotorblechpaket verlaufender, schraubenspindelförmiger Kühlkanal gebildet wird, welcher zwei gegenüberliegende Stirnseiten des Rotorblechpakets miteinander verbindet.

Dabei können die Durchbrüche von in der Stapelrichtung versetzten Blechen des Rotorblechpakets von einem Blech zu einem unmittelbar benachbarten Blech in der Umfangsrichtung der Bleche versetzt zueinander angeordnet ein. Durch diese Anordnung kann durch die Durchbrüche ein Kühlkanal mit besonders kleinem Steigungswinkel ausgebildet werden. Dadurch kann ein durch den wenigstens einen Kühlkanal geleiteter Volumenstrom an Kühlmittel an einer besonders großen Oberfläche des Kühlkanals vorbeiströmen und dabei besonders viel Wärme des Rotors aufnehmen.

Alternativ kann vorgesehen sein, dass die Durchbrüche von in der Stapelrichtung versetzten Blechen des Rotorblechpakets von einem Teil-Blechpaket zu einem unmittelbar benachbarten Teil-Blechpaket in einer Umfangsrichtung der Bleche versetzt zueinander angeordnet sind. Ein Teil-Blechpaket umfasst dabei jeweils eine Mehrzahl aufeinander gestapelter Bleche. Innerhalb der Teil-Blechpakete sind die insbesondere kongruenten Bleche in Umfangsrichtung gleich ausgerichtet, das heißt die Durchbrüche von in der Stapelrichtung versetzten Blechen sind innerhalb des Teil-Blechpakets nicht in der Umfangsrichtung der Bleche versetzt zueinander angeordnet. Durch diese Anordnung können durch die Durchbrüche Kühlkanäle mit besonders großem Steigungswinkel ausgebildet werden, so dass ein durch den wenigstens einen Kühlkanal geleiteter Volumenstrom an Kühlmedium besonders zügig den Kühlkanal passieren kann.

Die Durchbrüche von in der Stapelrichtung versetzten Blechen des Rotorblechpakets können ferner in der Umfangsrichtung der Bleche um einen Nutsprung versetzt zueinander angeordnet sein. Ein Nutsprung ist hierbei der umfängliche Abstand bzw. der Winkelabstand zweier benachbarter Wicklungsnuten zueinander. Diese Maßeinheit zur Verschiebung bzw. zur versetzten Anordnung ermöglicht eine besonders einfache und exakte Fertigung des Blechpakets mit durch die Durchbrüche ausgebildeten schraubenspindelförmigen Kühlkanälen. Alternativ können die Durchbrüche von in der Stapelrichtung versetzten Blechen in der Umfangsrichtung der Bleche auch um ein ganzzahliges Vielfaches eines Nutsprungs versetzt zueinander angeordnet sein, je nachdem welche Steigung der Kühlkanal aufweisen soll.

Weiterhin lässt sich durch gleich- oder gegensinniges verdrehen der Einzelbleche um mindestens einen Nutsprung eine jeweils linksgängige bzw. rechtsgängige Förderspirale ausbilden. Diese können als eigens oder zusammen als Kombination auf einer Welle angeordnet sein.

Sorgt man bei der letztens genannten Anordnung im Bereich der Umkehrung des Spindelganges für Freimachungen bzw. Durchgänge zu den schraubenspindelförmigen Kühlkanälen, so erhält man die Möglichkeit, über eine Bohrung in der Rotorwelle ein Kühlmedium wie z.B. Öl axial in beide Richtungen des Rotors zu fördern. Dabei wird das Kühlmedium beim Verlassen der Förderspiralen bedingt durch die Fliehkräfte in Richtung der Stator-Wickelköpfe radial abgeschleudert. So eignet sich das vorstehend beschriebene Kühlsystem sowohl zum Ansaugen eines Kühlmediums über die Rotorwelle als auch zur intensiven Kühlung des Rotors über die Durchströmung der Förderspiralen. Bei Asynchronmaschinen können die Kurzschlussringe als Hotspots direkt mit Kühlflüssigkeit, z.B. Öl, gekühlt werden. Weiterhin eignet sich das Kühlsystem zur ebenfalls besonders intensiven Kühlung der Stator-Wickelköpfe der elektrischen Maschine durch Aufschleudern von Kühlmittel, z.B. Öl, auf die Stator-Wickelköpfe. Nach Abtropfen und Rückkühlen des Öls insbesondere in einem Wärmetauscher kann es erneut dem Kühlkreislauf des Systems über die Rotorwelle zugeführt werden.

Das vorstehend beschriebene Kühlsystem ist besonders vorteilhaft einsetzbar in einer elektrischen Maschine in Form einer getriebeintegrierten Elektromaschine (GEM), welche unterstützend zu einem Verbrennungsmotor eines Kraftfahrzeugs wirken kann, oder in Form einer Traktions-Elektromaschine (TEM), welche alleine den Vortrieb des Kraftfahrzeugs übernehmen kann.

Gemäß einer Ausführungsform ist vorgesehen, dass die Zuführleitung eine Bohrung umfasst, welche axial innerhalb der Rotorwelle verläuft und einen inneren Bereich der Rotorwelle mit einer Stirnseite der Rotorwelle verbindet, wobei eine innerhalb der Rotorwelle verlaufende Verbindungsleitung die Bohrung mit dem Durchgang verbindet. Bei der Bohrung kann es sich insbesondere um eine zentrische Bohrung handeln, insbesondere eine Sacklochbohrung. Weiterhin kann auch eine Hohlwelle oder eine Durchgangsbohrung zum Einsatz kommen, welche einseitig verschlossen wird. Die Verbindungsleitung kann beispielsweise ebenfalls eine Bohrung innerhalb der Rotorwelle umfassen, welche in radialer Richtung verlaufen und in axialer Richtung auf gleicher Höher angeordnet sein kann wie der wenigstens eine Durchgang innerhalb des Rotorblechpakets, wobei es sich insbesondere um eine Durchgangsbohrung in radialer Richtung handeln kann.

Gemäß einer weiteren Ausführungsform ist vorgesehen, dass mehrere erste Kühlkanäle und zweite Kühlkanäle gebildet werden, welche über mehrere radial verlaufende und entlang des Umfangs gleichverteilt angeordnete Durchgänge innerhalb des Rotorblechpakets mit der Zuführleitung innerhalb der Rotorwelle verbunden sind. Die Bleche können jeweils mehrere auf einem Kreisring der Bleche angeordnete Durchbrüche aufweisen, welche die Stirnseiten des jeweiligen Blechs miteinander verbinden, wobei die Durchbrüche von in der Stapelrichtung versetzten Blechen in einer Umfangsrichtung der Bleche entsprechend versetzt zueinander angeordnet sind, dass die mehreren durch das Rotorblechpaket verlaufenden, schraubenspindelförmigen ersten und zweiten Kühlkanäle gebildet werden. Durch die mehreren Kühlkanäle kann besonders viel Kühlflüssigkeit, insbesondere elektrisch isolierende Kühlflüssigkeit, durch das Rotorblechpaket geleitet und auf die Stator-Wickelköpfe geschleudert werden. Dadurch wird eine besonders hohe Wärmeabfuhr im Bereich des Rotorblechpakets und der Stator-Wickelköpfe ermöglicht. Die Durchbrüche können insbesondere äquidistant zueinander angeordnet sein, wodurch parallel zueinander verlaufende Kühlkanäle gebildet werden können, welche eine besonders gleichmäßige Wärmeabfuhr aus dem Rotorblechpaket ermöglichen. Zwischen benachbarten Durchbrüchen bildet das Blech jeweils eine Speiche aus. Das entstehende Speichen-Design gemäß dieser Ausführungsform ermöglicht eine hohe Rotorsteifigkeit bzw. Rotorfestigkeit und eine Übertragung hoher Drehmomente.

Der Rotor kann ferner Leitmittel zum Leiten der Kühlflüssigkeit vom Rotor zu den Stator-Wickelköpfen aufweisen. Diese Leitmittel ermöglichen, dass das Kühlmittel besonders zielgerichtet und effizient auf die Stator-Wickelköpfe geschleudert werden kann.

Die Leitmittel können insbesondere mindestens eine Schleuderscheibe und/oder mehrere Flügel oder Schaufeln umfassen, welche für die Leitung der Kühlflüssigkeit besonders geeignet sind.

Sofern es sich bei der elektrischen Maschine um eine Asynchronmaschine mit an den Stirnseiten des Rotors angeordneten Kurzschlussringen handelt, kann vorteilhaft vorgesehen sein, dass an den Kurzschlussringen Schaufeln zum Leiten der Kühlflüssigkeit vom Rotor zu den Stator-Wickelköpfen angeordnet sind. Die Schaufeln ermöglichen, dass die Kühlflüssigkeit im Bereich der Stirnseiten des Rotorblechpakets durch eine Unterstützung der Sogwirkung der Förderspiralen von innen nach außen leitbar ist. Die Schaufeln können dabei insbesondere rückwärtsgekrümmt ausgebildet sein.

Auch das Gehäuse kann unterstützend oder alternativ Leitmittel der vorstehend beschriebenen Art zum Leiten der Kühlflüssigkeit vom Rotor zu den Stator-Wickelköpfen aufweisen.

Weiterhin kann vorgesehen sein, dass die Kühlflüssigkeit nicht elektrisch leitend ist. Insbesondere kann Öl als Kühlflüssigkeit verwendet werden, insbesondere Getriebeöl.

Gemäß einer weiteren Ausführungsform weist die elektrische Maschine einen Umlaufkühlkreislauf mit einer Pumpe und einem Wärmetauscher zur Kühlung der Kühlflüssigkeit, insbesondere Öl, auf. Die Pumpe kann die elektrisch isolierende Kühlflüssigkeit aus dem Kühlflüssigkeits-Reservoir ansaugen, durch den Wärmetauscher fördern, wo es durch ein zweites Kühlmedium gekühlt wird, beispielsweise durch Kühlwasser eines Hauptkühlkreislaufs, und anschließend wieder zurück in das Kühlflüssigkeits-Reservoir fördern.

Alternativ oder zusätzlich kann vorteilhaft vorgesehen sein, dass weitere Kühlkanäle zur Kühlung der elektrisch isolierenden Kühlflüssigkeit in einer Wandung des Gehäuses angeordnet sind. Innerhalb der weiteren Kühlkanäle kann beispielsweise Kühlwasser eines Hauptkühlkreislaufs gefördert werden, um Wärme von der elektrisch isolierenden Kühlflüssigkeit, insbesondere Öl, aufzunehmen. Auf eine Pumpe zur Förderung der elektrisch isolierenden Kühlflüssigkeit kann gemäß dieser Alternative verzichtet werden.

Im Folgenden werden Ausführungsbeispiele der Erfindung anhand der schematischen Zeichnung näher erläutert. Hierbei zeigt:
- Fig. 1: eine perspektivische Ansicht eines Rotors mit einem Rotorblechpaket, mehreren schraubenspindelförmigen Kühlkanälen und Kurzschlussringen,
- Fig. 2: eine Draufsicht auf ein einzelnes Blech eines Rotorblechpakets,
- Fig. 3: eine perspektivische Ansicht auf mehrere übereinander gestapelte Bleche nach Fig. 2 mit dargestellter Entstehung von Kühlkanälen,
- Fig. 4: eine Seitenansicht einer Rotorwelle mit einem Rotorblechpaket mit schraubenspindelförmigen Kühlkanälen,
- Fig. 5: eine Längsschnittdarstellung der Rotorwelle mit Rotorblechpaket mit schraubenspindelförmigen Kühlkanälen nach Fig. 4,
- Fig. 6: eine Längsschnittdarstellung einer Rotorwelle mit einem Rotorblechpaket mit schraubenspindelförmigen Kühlkanälen und Kurzschlussringen und
- Fig. 7: einen Längsschnitt durch eine getriebeintegrierte elektrische Maschine.

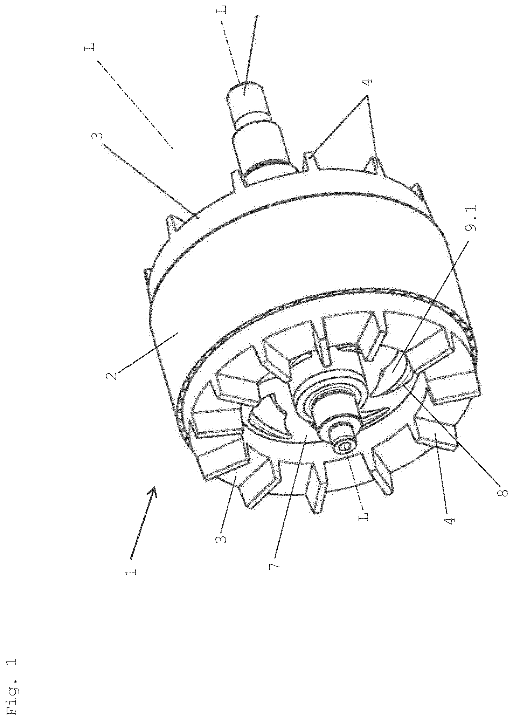

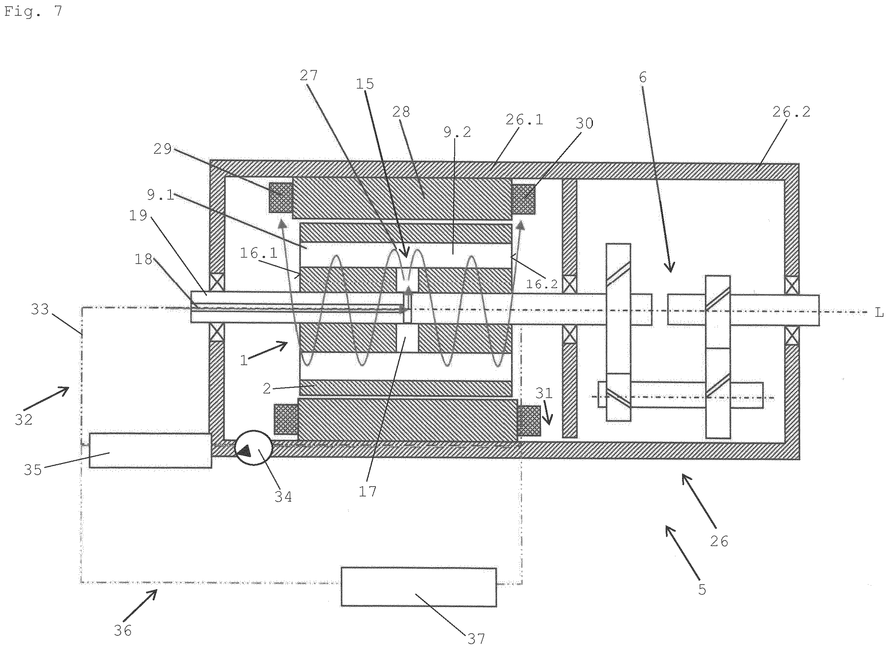

Fig. 1 zeigt einen Rotor 1 umfassend ein Blechpaket 2 und zwei Kurzschlussringe 3 mit Schaufeln 4. Der Rotor 1 eignet sich zum Einsatz in einer durch Fig. 7 gezeigten elektrischen Maschine 5 (z.B. in einem Asynchronmotor) mit einem integrierten Getriebe 6. Das Rotorblechpaket 2 umfasst mehrere in einer Längsrichtung L des Rotors 1 übereinander gestapelte, zum Großteil identische Bleche 7, wobei die Bleche 7 jeweils fünf Durchbrüche 8 aufweisen und die Durchbrüche 8 aller übereinander gestapelter Bleche 7 durch das Rotorblechpaket 2 verlaufende, schraubenspindelförmige Kühlkanäle 9.1 ausbilden.

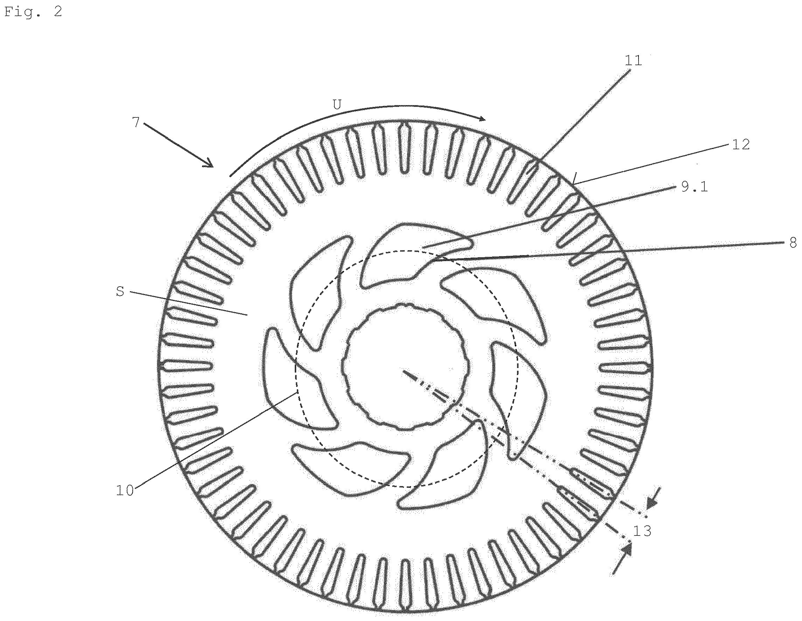

Fig. 2 zeigt exemplarisch ein Blech 7 eines Rotorblechpakets 2. Jeder der sieben gestanzten Durchbrüche 8 des Blechs 7 verbindet gegenüberliegende Stirnseiten S des Blechs 7 miteinander und bildet einen Abschnitt von sieben parallel zueinander verlaufenden, schraubenspindelförmigen Kühlkanälen 9.1 aus, welche dadurch entstehen, dass die einzelnen Bleche 7 deckungsgleich in Längsrichtung L des Rotors 1 zu dem Rotorblechpaket 2 gestapelt werden, wobei entweder jedes einzelne Blech 7 oder Pakete von mehreren Blechen 7 in Umfangrichtung U versetzt zueinander angeordnet werden. Die Durchbrüche 8 sind jeweils auf einem gedachten Kreisring 10 der Bleche 7 angeordnet. Zwischen benachbarten Durchbrüchen 8 bildet das Blech 7 jeweils eine Speiche aus. Ferner weist das Blech 7 mehrere sich radial nach außen erstreckende, identische Wicklungsnuten 11 auf, welche äquidistant entlang eines äußeren Umfangs 12 des Blechs 7 um jeweils einen Nutsprung 13 verteilt sind. Der Nutsprung 13 ist hierbei der umfängliche Abstand bzw. der Winkelabstand zweier benachbarter Wicklungsnuten 11 zueinander.

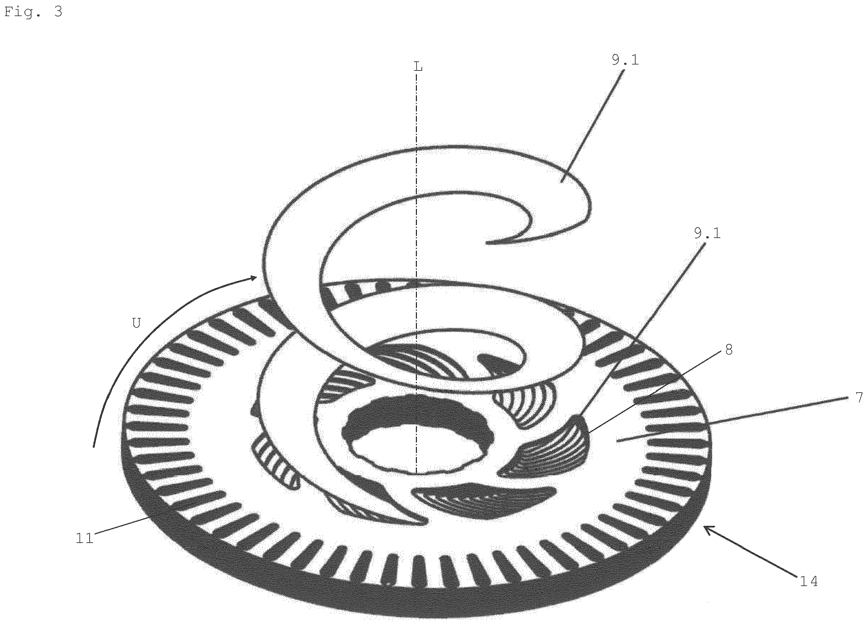

Wie insbesondere aus Fig. 3 ersichtlich, werden die Bleche 7 derart zueinander verdreht zu einem Blechstapel 14 gestapelt, dass die Durchbrüche 8 von in der Stapelrichtung L versetzten Blechen 7 in einer Umfangsrichtung U der Bleche 7 von einem Blech zu einem unmittelbar benachbarten Blech versetzt zueinander angeordnet sind. Die Durchbrüche 8 der in Stapelrichtung L versetzten Bleche sind dabei in der Umfangsrichtung U der Bleche 7 um jeweils einen Nutsprung 13 versetzt zueinander angeordnet. Dadurch ergibt sich ein relativ kleiner Steigungswinkel α des Kühlkanals 9.1. Der Nutsprung 13 stellt dabei den Winkelabstand zweier benachbarter Wicklungsnuten 11 dar. Die Durchbrüche 8 bilden dadurch schraubenspindelförmige Kühlkanäle 9.1 aus, wobei der Verlauf einer dieser Kühlkanäle 9.1 in Form einer archimedischen Schraube in Fig. 3 zur Verdeutlichung teilweise ohne zugehörige Bleche 7 dargestellt ist. Die Kühlkanäle 9.1 verlaufen untereinander parallel.

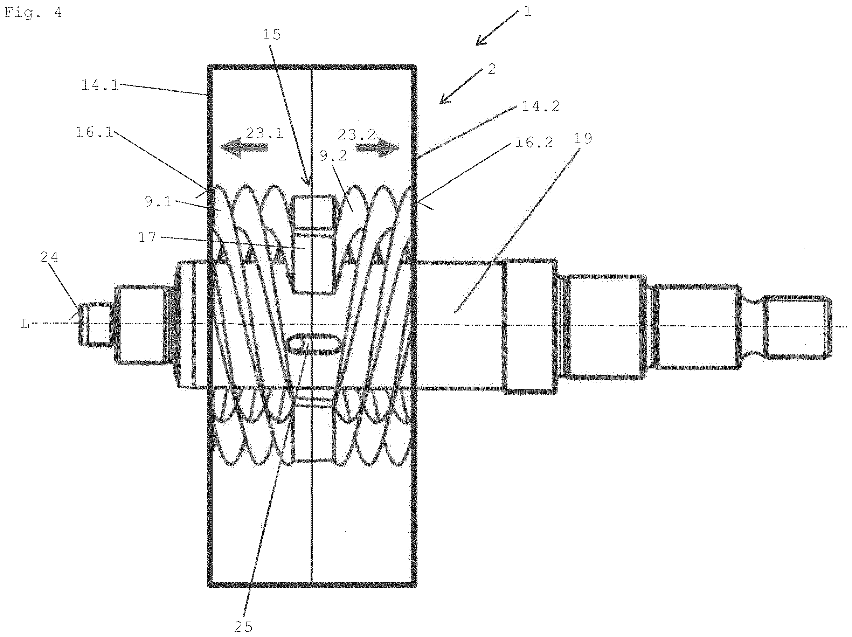

Fig. 4 bis 6 zeigen, dass nachdem Bleche 7 wie vorstehend beschrieben gestapelt worden sind, ein dadurch entstandener Blechstapel 14 in Längsrichtung L betrachtet in der Mitte geteilt wurde. Dadurch entstehen zwei Teil-Blechstapel 14.1 und 14.2 mit der gleichen Anzahl von Blechen 7. Dabei ist der Teil-Blechstapel 14.2 so ausgeprägt, dass die Stapelung um mindestens einen Nutsprung gegensinnig zum Teil-Blechstapel 14.1 verläuft und anschließend beide Teil-Blechstapel 14.1 und 14.2 zum Rotorblechpaket 2 zusammengefügt werden. Auf diese Weise entstanden in dem ersten Stapel-Abschnitt 14.1 mehrere linksgängige Förderspiralen in Form der ersten schraubenspindelförmigen Kühlkanäle 9.1 und in dem zweiten Stapel-Abschnitt 14.2 mehrere rechtsgängige Förderspiralen in Form der zweiten schraubenspindelförmigen Kühlkanäle 9.2.

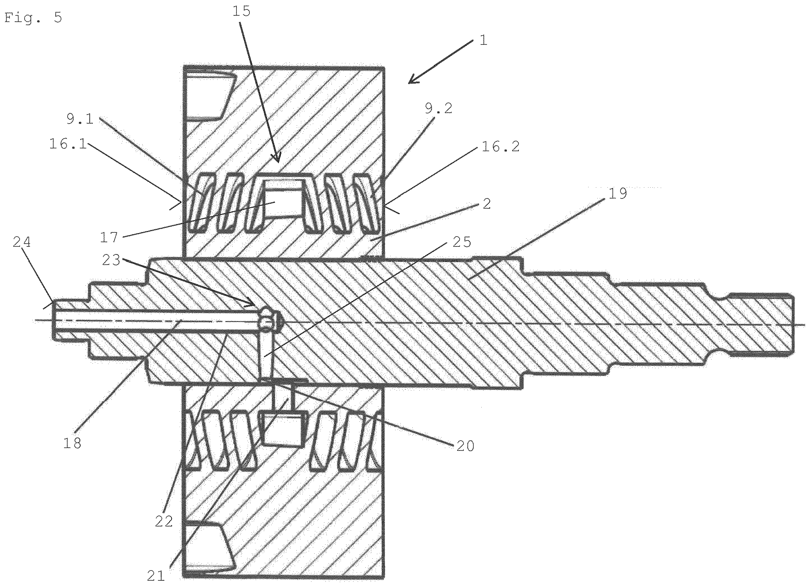

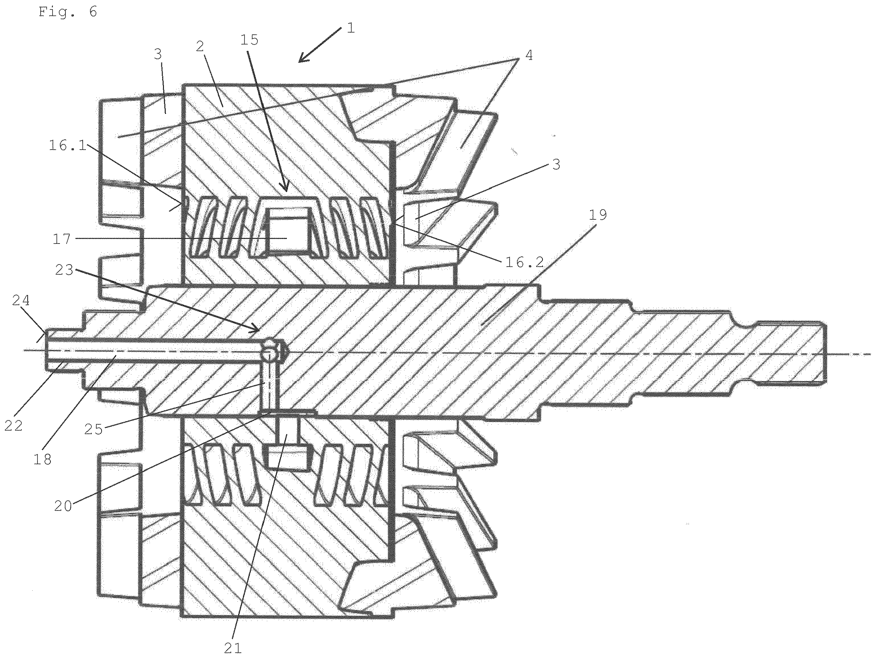

Die ersten und die zweiten Kühlkanäle 9.1 und 9.2 verbinden einen inneren Bereich 15 des Rotorblechpakets 2 mit jeweils einer Stirnseite 16.1 bzw. 16.2 des Rotorblechpakets 2. Der innere Bereich 15 ist bezogen auf die Längsrichtung L des Rotorblechpakets 2 ein zentraler innerer Hohlraum, welcher von beiden Stirnseiten 16.1 bzw. 16.2 des Rotorblechpakets 2 den gleichen Abstand aufweist. Der innere Bereich 15 ist ein Bestandteil mehrerer radial durch das Blechpaket verlaufender Durchgänge 16, welche die ersten und zweiten Kühlkanäle 9.1 und 9.2 mit einer Kühlflüssigkeit führenden Zuführleitung 18 innerhalb einer Rotorwelle 19 verbinden, auf welcher das Rotorblechpaket 2 drehfest gelagert ist. Die Durchgänge können eine Nut 20 und eine radial verlaufende Bohrung 21 aufweisen (Fig. 5 und 6), wobei sich die Nut 21 in dem gezeigten Beispiel an der Rotorwelle 19 befindet. Die Zuführleitung 18 des Rotors 19 umfasst eine Bohrung 22, welche axial innerhalb der Rotorwelle 19 verläuft und einen inneren Bereich 23 der Rotorwelle 19 mit einer Stirnseite 24 der Rotorwelle 19 verbindet, wobei eine radial innerhalb der Rotorwelle 19 verlaufende Verbindungsleitung 25 die Bohrung 22 mit den Durchgängen 17 des Rotorblechpakets 2 verbindet.

Die Kühlflüssigkeit wird dem inneren Bereich 15 des Rotorblechpakets 2 über die Zuführleitung 18 der Rotorwelle 19 und über die Durchgänge 17 zugeführt. Somit bilden die Rotorwelle 19 und das Rotorblechpaket 2 gemeinsam eine Zuführeinrichtung für Kühlflüssigkeit aus, wobei die schraubenspindelförmigen Kühlkanäle 9.1 und 9.2 bei Rotation des Rotorblechpakets 2 Kühlmittel über die Zuführleitung 18 der Rotorwelle 19 und die Durchgänge 17 des Rotorblechpakets 2 ansaugen, durch die Kühlkanäle 9.1 und 9.2 fördern und radial nach außen auf Stator-Wickelköpfe 29 und 30 (Fig. 7) der elektrischen Maschine 5 schleudern können.

Die ersten und zweiten Kühlkanäle 9.1 und 9.2 sind dabei gegenläufig zueinander orientiert, das heißt die Förderrichtungen 23.1 und 23.2 der durch die Kühlkanäle 9.1 und 9.2 ausgebildeten Förderspiralen zeigen in einander entgegengesetzte Richtungen. Man könnte somit von rechtsgängigen/linksgängigen Förderspiralen sprechen, welche durch die ersten/zweiten Kühlkanäle 9.1/9.2 gebildet werden. Die Geometrie der ersten und zweiten Kühlkanäle 9.1 und 9.2 ist derart ausgestaltet, dass bei einer ausreichend hohen Drehzahl der Rotorwelle 19 und damit auch des Rotorblechpakets 2 Kühlflüssigkeit aus dem inneren Bereich 15 angesaugt, durch die ersten und zweiten Kühlkanäle 9.1 und 9.2 gefördert, auf der ersten und zweiten Stirnseite 16.1 und 16.2 aus den Kühlkanälen 9.1 und 9.2 ausgestoßen und unter Ausnutzung von auf die Kühlflüssigkeit wirkenden Fliehkräften auf die Stator-Wickelköpfe 29, 30 geschleudert wird.

Fig. 7 zeigt eine elektrische Maschine 5 mit einem Gehäuse 26 und einem Öl-Kühlkreislauf 27, dessen Förderrichtung innerhalb des Gehäuses 26 mit Pfeilen veranschaulicht ist. In einem in Figur 7 links dargestellten ersten Abschnitt 26.1 des Gehäuses 26 ist die Rotorwelle 19 drehbar gelagert. In einem in Fig. 7 rechts dargestellten zweiten Abschnitt 26.2 des Gehäuses 26 ist das Getriebe 6 untergebracht, welches von der Rotorwelle 19 angetrieben wird. Auf der Rotorwelle 19 ist ein Rotor 1 mit einem Rotorblechpaket 2 nach einer der Figuren 1 bis 6 drehfest gelagert, sodass sich bei rotierender Rotorwelle 19 auch der Rotor 1 und das Rotorblechpaket 2 drehen. Der Rotor 1 wird mit geringem Abstand radial von einem fest stehenden Stator 28 umgeben, welcher an seinen beiden gegenüberliegenden Stirnseiten jeweils einen Stator-Wickelkopf 29 und 30 aufweist, welche in axialer Richtung über zwei einander gegenüberliegende axiale Stirnseiten des Rotors 1 hinausragen. In seinem unteren Bereich bildet das Gehäuse 26 weiterhin ein Reservoir für Kühlflüssigkeit in Form eines Sumpfes 31 für Öl aus, welches insbesondere der Kühlung des Rotors 1, Stators 28 und Getriebes 6 dient.

Nachdem das Öl, wie im Folgenden dargestellt wird, Wärme insbesondere von dem Rotor 1 und dem Stator 28 aufgenommen hat, wird es in einem Umlauf-Kühlkreislauf 32 rückgekühlt. Der Umlauf-Kühlkreislauf 32 umfasst eine Kühlmittelleitung 33, welche eingangsseitig an den Sumpf 31 und ausgangsseitig an die Bohrung 22 der Zuführleitung 18 der Rotorwelle 19 angeschlossen ist. Innerhalb der Kühlmittelleitung 33 ist eine Förderpumpe 34 angeordnet, welche Öl aus dem Sumpf 31 ansaugt und über einen Wärmetauscher 35 in die Zuführleitung 18 fördert. Zur Kühlung des Öls innerhalb des Wärmetauschers 35 wird dieser zusätzlich von Kühlwasser durchströmt, welches in einem Hauptkühlkreislauf 36 zirkuliert und wiederum von einem Hauptwasserkühler 37 gekühlt wird.

Bei stillstehendem Rotor 1 sammelt sich das Öl in dem Sumpf 31. Wird die elektrische Maschine 5 in den Betriebszustand versetzt, so rotiert die Rotorwelle 19 und mit ihr rotieren auch der Rotor 1 und die schraubenspindelförmigen Kühlkanäle 9.1 und 9.2 des Rotorblechpakets 2. Durch die Rotation der schraubenspindelförmigen Kühlkanäle 9.1 und 9.2 wird Öl über die Zuführleitung 18 und über die Durchgänge 17 angesaugt, durch die Kühlkanäle 9.1 und 9.2 gefördert und nach Austritt aus den Kühlkanälen 9.1 und 9.2 auf die Stator-Wickelköpfe 29 und 30 geschleudert. Die durch Fig. 1 und 6 gezeigten Schaufeln 4 der Kurzschlussringe 3 dienen dabei der Leitung des Öls zu den Stator-Wickelköpfen 29 und 30, nachdem sie aus den Kühlkanälen 9.1 und 9.2 ausgetreten sind.

Das Öl kann, nachdem es auf die Wickelköpfe 29 und 30 geschleudert worden ist, in den Ölsumpf 31 abtropfen und über den Umlauf-Kühlkreislauf 32 rückgekühlt werden. Alternativ kann auch vorgesehen sein, dass Kühlkanäle in einer Wandung des Gehäuses 26 angeordnet sind, welche beispielsweise durch Kühlwasser des Hauptkühlkreislaufs 36 durchströmt werden und für eine Rückkühlung des Öls innerhalb des Gehäuses 26 sorgen.

## Patentansprüche

1. Elektrische Maschine (5) umfassend einen auf einer Rotorwelle (19) gelagerten Rotor (1) mit einem Rotorblechpaket (2), einen Stator (28) mit Stator-Wickelköpfen (29, 30), welche an gegenüberliegenden Stirnseiten des Stators (28) angeordnet sind, und ein Gehäuse (26, 26.1, 26.2) mit einem Reservoir (31) für eine Kühlflüssigkeit,
wobei das Rotorblechpaket (2) mehrere in einer Stapelrichtung (L) gestapelte Bleche (7) umfasst, wobei die Bleche (7) jeweils wenigstens einen Durchbruch (8) aufweisen, welcher die Stirnseiten (S) des jeweiligen Blechs (7) miteinander verbindet, und wobei die Durchbrüche (8) von in der Stapelrichtung (L) versetzten Blechen (7) in einer Umfangsrichtung (U) der Bleche (7) derart versetzt zueinander angeordnet sind, dass
- wenigstens ein durch das Rotorblechpaket (2) verlaufender, schraubenspindelförmiger erster Kühlkanal (9.1) gebildet wird, welcher einen inneren Bereich (15) des Rotorblechpakets (2) mit einer ersten Stirnseite (16.1) des Rotorblechpakets (2) verbindet,
- wenigstens ein durch das Rotorblechpaket (2) verlaufender, schraubenspindelförmiger zweiter Kühlkanal (9.2) gebildet wird, welcher den inneren Bereich (15) des Rotorblechpakets (2) mit einer der ersten Stirnseite (16.1) gegenüberliegenden zweiten Stirnseite (16.2) des Rotorblechpakets (2) verbindet,
wobei der erste Kühlkanal (9.1) und der zweite Kühlkanal (9.2)
- gegenläufig zueinander orientiert sind, und
- über wenigstens einen Durchgang (17) innerhalb des Rotorblechpakets (2) mit einer die Kühlflüssigkeit führenden Zuführleitung (18) innerhalb der Rotorwelle (19) verbunden sind.

2. Elektrische Maschine (5) nach Anspruch 1, **dadurch gekennzeichnet, dass** die Zuführleitung (18) eine Bohrung (22) umfasst, welche axial innerhalb der Rotorwelle (19) verläuft und einen inneren Bereich (23) der Rotorwelle (19) mit einer Stirnseite (24) der Rotorwelle (19) verbindet, wobei eine innerhalb der Rotorwelle (19) verlaufende Verbindungsleitung (25) die Bohrung (22) mit dem Durchgang (17) verbindet.

3. Elektrische Maschine (5) nach Anspruch 1 oder 2, **dadurch gekennzeichnet, dass** mehrere erste Kühlkanäle (9.1) und zweite Kühlkanäle (9.2) gebildet werden, welche über mehrere radial verlaufende und entlang des Umfangs gleichverteilt angeordnete Durchgänge (17) innerhalb des Rotorblechpakets (2) mit der Zuführleitung (18) innerhalb der Rotorwelle (19) verbunden sind.

4. Elektrische Maschine (5) nach einem der vorstehenden Ansprüche, **dadurch gekennzeichnet, dass** der Rotor (19) Leitmittel zum Leiten der Kühlflüssigkeit vom Rotor (1) zu den Stator-Wickelköpfen (29, 30) aufweist.

5. Elektrische Maschine (5) nach Anspruch 4, **dadurch gekennzeichnet, dass** die Leitmittel eine Schleuderscheibe und/oder mehrere Flügel (4) oder Schaufeln umfassen.

6. Elektrische Maschine (5) nach Anspruch 4 oder 5, **dadurch gekennzeichnet, dass** die elektrische Maschine (5) eine Asynchronmaschine mit an den Stirnseiten (16.1, 16.2) des Rotors (1) angeordneten Kurzschlussringen (3) ist, wobei an den Kurzschlussringen (3) Schaufeln (4) zum Leiten der Kühlflüssigkeit vom Rotor (1) zu den Stator-Wickelköpfen (29, 30) angeordnet sind.

7. Elektrische Maschine (5) nach Anspruch 6, **dadurch gekennzeichnet, dass** die Schaufeln (4) rückwärtsgekrümmt sind.

8. Elektrische Maschine (5) nach einem der vorstehenden Ansprüche, **dadurch gekennzeichnet, dass** das Gehäuse (26) Leitmittel zum Leiten der Kühlflüssigkeit vom Rotor (1) zu den Stator-Wickelköpfen (29, 30) aufweist.

9. Elektrische Maschine (5) nach einem der vorstehenden Ansprüche, **dadurch gekennzeichnet, dass** die Kühlflüssigkeit nicht elektrisch leitend ist.

10. Elektrische Maschine (5) nach einem der vorstehenden Ansprüche, **dadurch gekennzeichnet, dass** die elektrische Maschine (5) einen Umlaufkühlkreislauf (32) mit einer Pumpe (34) und einem Wärmetauscher (35) zur Kühlung der elektrisch isolierenden Kühlflüssigkeit aufweist.

11. Elektrische Maschine (5) nach einem der vorstehenden Ansprüche, **dadurch gekennzeichnet, dass** weitere Kühlkanäle zur Kühlung der elektrisch isolierenden Kühlflüssigkeit in einer Wandung des Gehäuses (26) angeordnet sind.

## Claims

1. Electric machine (5) comprising a rotor (1) which is mounted on a rotor shaft (19) and which has a rotor laminated core (2), a stator (28) with stator winding heads (29, 30) which are arranged on opposite end faces of the stator (28), and a housing (26, 26.1, 26.2) with a reservoir (31) for a cooling liquid, wherein the rotor laminated core (2) comprises multiple laminations (7) which are stacked in a stacking direction (L), wherein the laminations (7) each have at least one aperture (8) which connects the end faces (S) of the respective lamination (7) to one another, and wherein the apertures (8) of laminations (7) offset in the stacking direction (L) are arranged offset with respect to one another in a circumferential direction (U) of the laminations (7), such that
- at least one first helical cooling channel (9.1) is formed which runs through the rotor laminated core (2) and which connects an inner region (15) of the rotor laminated core (2) to a first end face (16.1) of the rotor laminated core (2),
- at least one second helical cooling channel (9.2) is formed which runs through the rotor laminated core (2) and which connects the inner region (15) of the rotor laminated core (2) to a second end face (16.2), situated opposite the first end face (16.1), of the rotor laminated core (2),
wherein the first cooling channel (9.1) and the second cooling channel (9.2)
- are oriented oppositely with respect to one another, and
- are connected via at least one passage (17) within the rotor laminated core (2) to a feed line (18), which conducts the cooling liquid, within the rotor shaft (19).

2. Electric machine (5) according to Claim 1, **characterized in that** the feed line (18) comprises a bore (22) which runs axially within the rotor shaft (19) and which connects an inner region (23) of the rotor shaft (19) to an end face (24) of the rotor shaft (19), wherein a connecting line (25) running within the rotor shaft (19) connects the bore (22) to the passage (17).

3. Electric machine (5) according to Claim 1 or 2, **characterized in that** multiple first cooling channels (9.1) and second cooling channels (9.2) are formed, which are connected to the feed line (18) within the rotor shaft (19) via multiple radially running passages (17), which are arranged so as to be distributed uniformly along the circumference, within the rotor laminated core (2).

4. Electric machine (5) according to one of the preceding claims, **characterized in that** the rotor (19) has the guide means for guiding the cooling liquid from the rotor (1) to the stator winding heads (29, 30).

5. Electric machine (5) according to Claim 4, **characterized in that** the guide means comprise a centrifuging disk and/or multiple vanes (4) or blades.

6. Electric machine (5) according to Claim 4 or 5, **characterized in that** the electric machine (5) is an asynchronous machine with short-circuiting rings (3) arranged on the end faces (16.1, 16.2) of the rotor (1), wherein, on the short-circuiting rings (3), there are arranged blades (4) for guiding the cooling liquid from the rotor (1) to the stator winding heads (29, 30).

7. Electric machine (5) according to Claim 6, **characterized in that** the blades (4) are backwardly curved.

8. Electric machine (5) according to one of the preceding claims, **characterized in that** the housing (26) has guide means for guiding the cooling liquid from the rotor (1) to the stator winding heads (29, 30).

9. Electric machine (5) according to one of the preceding claims, **characterized in that** the cooling liquid is not electrically conductive.

10. Electric machine (5) according to one of the preceding claims, **characterized in that** the electric machine (5) has a recirculation cooling circuit (32) with a pump (34) and with a heat exchanger (35) for cooling the electrically insulating cooling liquid.

11. Electric machine (5) according to one of the preceding claims, **characterized in that** further cooling channels for cooling the electrically insulating cooling liquid are arranged in a wall of the housing (26).

## Revendications

1. Machine électrique (5) comprenant un rotor (1) monté sur un arbre de rotor (19) et pourvu d'un noyau feuilleté (2), un stator (28) pourvu de têtes d'enroulement (29, 30) qui sont disposées sur des faces d'extrémité opposées du stator (28) et un boîtier (26, 26.1, 26.2) pourvu d'un réservoir (31) destiné à un fluide de refroidissement,
le noyau feuilleté (2) comprenant une pluralité de feuilles (7) empilées dans une direction d'empilement (L), les feuilles (7) comportant chacune au moins un passage (8) qui relie entre elles les faces d'extrémité (S) de la feuille respective (7), et les passages (8) étant disposés les uns par rapport aux autres dans une direction périphérique (U) des feuilles (7) en étant décalés des feuilles (7) qui sont décalées dans la direction d'empilement (L) de telle sorte que
- au moins un premier conduit de refroidissement (9.1) en forme de broche filetée est formé, lequel s'étend à travers le noyau feuilleté (2) et relie une région intérieure (15) du noyau feuilleté (2) à une première face d'extrémité (16.1) du noyau feuilleté (2),
- au moins un deuxième conduit de refroidissement (9.2) en forme de broche filetée est formé, lequel s'étend à travers le noyau feuilleté (2) et relie la région intérieure (15) du noyau feuilleté (2) à une deuxième face d'extrémité (16.2) du noyau feuilleté (2) qui est opposée à la première face d'extrémité (16.1),
le premier conduit de refroidissement (9.1) et le deuxième conduit de refroidissement (9.2)
- étant orientés à l'opposé l'un de l'autre, et
- étant reliés à une conduite d'amenée (18), conduisant le liquide de refroidissement et située à l'intérieur de l'arbre de rotor (19), par le biais d'au moins un passage (17) ménagé à l'intérieur du noyau feuilleté (2).

2. Machine électrique (5) selon la revendication 1, **caractérisée en ce que** la conduite d'amenée (18) comprend un alésage (22) qui s'étend axialement à l'intérieur de l'arbre de rotor (19) et qui relie une région intérieure (23) de l'arbre du rotor (19) à la face d'extrémité (24) de l'arbre de rotor (19), une conduite de liaison (25) qui s'étend à l'intérieur de l'arbre de rotor (19) reliant l'alésage (22) au passage (17).

3. Machine électrique (5) selon la revendication 1 ou 2, **caractérisée en ce qu'**une pluralité de premiers conduits de refroidissement (9.1) et de deuxièmes conduits de refroidissement (9.2) sont formés, lesquels sont reliés à la conduite d'amenée (18) située à l'intérieur de l'arbre de rotor (19) par le biais d'une pluralité de passages (17) s'étendant radialement, répartis uniformément le long de la périphérie et situés à l'intérieur du noyau feuilleté (2).

4. Machine électrique (5) selon l'une des revendications précédentes, **caractérisée en ce que** le rotor (19) comporte des moyens conducteurs destinés à conduire le liquide de refroidissement du rotor (1) aux têtes d'enroulement de stator (29, 30).

5. Machine électrique (5) selon la revendication 4, **caractérisée en ce que** les moyens conducteurs comprennent un disque centrifuge et/ou une pluralité d'ailes (4) ou de pales.

6. Machine électrique (5) selon la revendication 4 ou 5, **caractérisée en ce que** la machine électrique (5) est une machine asynchrone comprenant des bagues en court-circuit (3) disposées au niveau des faces d'extrémité (16.1, 16.2) du rotor (1), des pales (4) destinées à conduire le liquide de refroidissement du rotor (1) aux têtes d'enroulement de stator (29, 30) étant disposées au niveau des bagues en court-circuit (3).

7. Machine électrique (5) selon la revendication 6, **caractérisée en ce que** les pales (4) sont incurvées vers l'arrière.

8. Machine électrique (5) selon l'une des revendications précédentes, **caractérisée en ce que** le boîtier (26) comporte des moyens conducteurs destinés à conduire le liquide de refroidissement du rotor (1) aux têtes d'enroulement de stator (29, 30).

9. Machine électrique (5) selon l'une des revendications précédentes, **caractérisée en ce que** le liquide de refroidissement n'est pas électriquement conducteur.

10. Machine électrique (5) selon l'une des revendications précédentes, **caractérisée en ce que** la machine électrique (5) comporte un circuit fermé de refroidissement (32) pourvu d'une pompe (34) et d'un échangeur de chaleur (35) destiné à refroidir le liquide de refroidissement électriquement isolant.

11. Machine électrique (5) selon l'une des revendications précédentes, **caractérisée en ce que** d'autres conduits de refroidissement destinés à refroidir le liquide de refroidissement électriquement isolant sont ménagés dans une paroi du boîtier (26).
